# EUROPÄISCHE PATENTSCHRIFT

(11) **EP 3 667 766 B1**
(45) Veröffentlichungstag und Bekanntmachung des Hinweises auf die Patenterteilung: **09.06.2021**
(21) Anmeldenummer: 19211368.6
(22) Anmeldetag: 26.11.2019
(51) Int. Cl.: H01M 50/20, H01M 10/42, H01M 10/48

(54) **SPEICHERMODUL FÜR ELEKTRISCHE ENERGIE**
ELECTRICAL ENERGY STORAGE MODULE
MODULE D'ACCUMULATEUR POUR ÉNERGIE ÉLECTRIQUE

(30) Priorität: 11.12.2018 DE 102018131716
(43) Veröffentlichungstag der Anmeldung: 17.06.2020
(73) Patentinhaber: Miele & Cie. KG, 33332 Gütersloh (DE)
(72) Erfinder: Abdel-Rahim, Khalil, 33647 Bielefeld (DE); Gutapfel, Olaf, 59174 Kamen (DE); Laame, Ludger, 59590 Geseke (DE); Walfort, Dennis, 33604 Bielefeld (DE); Windhövel, Sebastian, 59302 Oelde-Stromberg (DE)

(56) Entgegenhaltungen:
- CN-A- 108 871 609
- DE-T5-112011 104 686
- GB-A- 2 387 020

## Beschreibung

Die Erfindung betrifft ein Speichermodul für elektrische Energie für ein Haushaltsgerät, mit einer oder mehreren Speicherzellen zum Speichern von elektrischer Energie, einer Leiterplatte und zumindest einem Temperatursensor, welcher an der Leiterplatte befestigt bzw. elektrisch damit verbunden und dazu eingerichtet ist, die Temperatur einer Speicherzelle zu erfassen.

Ferner betrifft die Erfindung ein Haushaltsgerät mit einem oder mehreren Verbrauchern von elektrischer Energie und einem Speichermodul für elektrische Energie, welches dazu eingerichtet ist, dem einen oder den mehreren Verbrauchern elektrische Energie bereitzustellen.

Darüber hinaus betrifft die Erfindung ein Verfahren zum Herstellen eines Speichermoduls für ein Haushaltsgerät, mit den Schritten: Bereitstellen einer Leiterplatte, Befestigen eines Temperatursensors in bzw. an einem Sensorbereich der Leiterplatte, Anordnen einer oder mehrere Speicherzellen zum Speichern von elektrischer Energie an der Leiterplatte und Herstellen einer wärmeleitenden Verbindung zwischen dem Temperatursensor und einer Speicherzelle mittels eines Wärmeleitmaterials, das fließfähig sein kann aber nicht muss.

Mobile bzw. portable Haushaltsgeräte sind häufig mit einem Speichermodul für elektrische Energie ausgestattet, sodass ein Betrieb dieser Haushaltsgeräte ohne eine kabelgebundene Leistungsversorgung erfolgen kann. Die Speicherzellen derartiger Speichermodule sind dabei in einem vorgegebenen Arbeitsbereich zu betreiben, sodass beispielsweise die Spannung, Stromstärke und Temperatur während des Betriebs des Haushaltsgeräts vorgegebene Betriebsbereiche nicht verlassen dürfen. Wird ein vorgegebener Betriebsbereich verlassen, beispielsweise aufgrund eines übermäßigen Spannungs- oder Temperaturanstiegs, kann das Speichermodul irreversibel beschädigt werden. Ferner besteht die Gefahr eines Zellenbrandes und einer Zellenexplosion, wodurch die Betriebssicherheit des Haushaltsgeräts erheblich beeinträchtigt werden kann.

Bei den im Stand der Technik bekannten Haushaltsgeräten, welche über ein derartiges Speichermodul verfügen, wird mittels eines Temperatursensors die Temperatur zumindest einer Speicherzelle überwacht, sodass die elektrische Verbindung zu den Verbrauchern des Haushaltsgeräts unterbrochen werden kann, sobald die Zelltemperatur, beispielsweise aufgrund von zu hoher elektrischer Belastung, einen vorgegebenen Betriebsbereich verlässt.

Auf diese Weise kann ein Brand oder eine Explosion eines Speichermoduls wirksam vermieden werden.

Die Temperatursensoren bekannter Speichermodule sind elektrisch mit der Leiterplatte des Batterie-Management-Systems (BMS) verbunden, wobei die Sensorbefestigung während des Herstellungsprozesses manuell mittels einer Durchsteckmontage (Through Hole Technology - THT) erfolgt. Dieses Befestigungskonzept hat den Nachteil, dass der Temperatursensor samt einer geeigneten Menge von Wärmeleitpaste manuell an der Speicherzelle zu positionieren und an der Leiterplatte des Batterie-Management-Systems anzulöten ist. Dies bedingt einen erheblichen Aufwand bei der Herstellung entsprechender Speichermodule und führt somit zu vergleichsweise hohen Produktionskosten. Die beschriebene Durchsteckmontage des Temperatursensors lässt sich außerdem nicht ohne weiteres in einen automatisierten Fertigungsprozess integrieren. Die Notwendigkeit von Handarbeit führt darüber hinaus zu einer beträchtlichen Steigerung des Montagefehlerrisikos, sodass eine aufwendige Qualitätskontrolle erforderlich ist.

Ferner führt die Befestigung des Temperatursensors mittels Durchsteckmontage üblicherweise dazu, dass der Temperatursensor nach dem Einbau nicht länger sichtbar ist.

Eine optische Kontrolle des Sensors und eventuell seiner Befestigung ist somit nicht möglich.

Ferner ist es bekannt, Temperatursensoren per Kabelbaum bzw. Litzen zu kontaktieren. Die Verwendung zusätzlicher elektrischer Leitungen führt jedoch zu einem gesteigerten Material- und Montageaufwand. Außerdem sind entsprechende Kontaktierlösungen in der Produktion vergleichsweise beschädigungsanfällig und mit hohem Handarbeitsanteil verbunden.

Die der Erfindung zugrundeliegende Aufgabe besteht somit darin, die Produktionskosten von Speichermodulen für elektrische Energie, welche über eine Temperaturüberwachung verfügen, zu reduzieren. Dies soll insbesondere durch die Ermöglichung einer automatisierten Produktion und einer effizienteren bzw. automatisierten Qualitätskontrolle erfolgen.

Die Aufgabe wird gelöst durch ein Speichermodul nach Anspruch 1, wobei der Temperatursensor des erfindungsgemäßen Speichermoduls auf der Leiterplatte oberflächenmontiert (Surface Mounted Device - SMD) ist und über eine zumindest teilweise mit Wärmeleitmaterial ausgefüllte Ausnehmung in der Leiterplatte wärmeübertragend mit der Speicherzelle verbunden ist.

Die Erfindung macht sich die Erkenntnis zunutze, dass durch das Vorsehen einer Ausnehmung innerhalb der Leiterplatte die thermische Isolationswirkung des Leiterplattenmaterials bereichsweise unterbrochen werden kann, sodass ein die Temperaturmessung ermöglichender Wärmetransport durch die Leiterplattenebene umgesetzt werden kann. Somit ist es nicht notwendig, den Temperatursensor manuell mittels einer Durchsteckmontage an der Leiterplatte zu befestigen. Dadurch, dass der Temperatursensor auf der Leiterplatte nunmehr oberflächenmontiert befestigt werden kann, ist eine vollautomatisierte Bestückung entsprechender Leiterplatten mit Temperatursensoren während der Speichermodulherstellung einfach realisierbar. Da die manuelle Bestückung, z.B. mit einer Mischung aus THT- (Through-Hole-Technology bzw. Durchsteckmontage) und SMD-Bauteilen entfällt, kommt es zu einer erheblichen Verringerung des Herstellungsaufwands und somit zu einer deutlichen Reduzierung der Herstellungskosten. Da die Sensorbefestigung nunmehr automatisiert erfolgen kann, wird außerdem eine erhebliche Steigerung der Modulqualität erreicht. Das Risiko von Montagefehlern wird deutlich reduziert.

Der Temperatursensor ist vorzugsweise mittels SMD-Pads mit der Leiterplatte verbunden. Auf der Leiterplatte sind weitere elektronische Komponenten des Batterie-Management-Systems angeordnet und befestigt. Vorzugsweise verfügt das Speichermodul oder das BMS über eine Steuerungseinrichtung mit einer Temperaturüberwachung, wobei mittels der Temperaturüberwachung die Zellentemperatur einer oder mehrerer Speicherzellen des Speichermoduls auf Grundlage der Sensorsignale des zumindest einen Temperatursensors überwachbar ist. Die Temperaturüberwachung der Steuerungseinrichtung oder des BMS veranlasst vorzugsweise ein Trennen der elektrisch leitfähigen Verbindung zu den Verbrauchern des Haushaltsgeräts, sobald die erfasste Temperatur der Speicherzelle einen vorgegebenen Temperaturbetriebsbereich verlässt. Das Wärmeleitmaterial ist vorzugsweise Wärmeleitpaste oder ähnliche Materialien. Vorzugsweise verbindet das Wärmeleitmaterial die Oberfläche der Speicherzelle und den Temperatursensor, sodass das Wärmeleitmaterial mit der Oberfläche der Speicherzelle und dem Temperatursensor thermisch verbunden ist. Die eine oder die mehreren Speicherzellen sind vorzugsweise Lithium-Ionen-Zellen.

In einer bevorzugten Ausführungsform des erfindungsgemäßen Speichermoduls erstreckt sich die Ausnehmung durch die gesamte Materialstärke der Leiterplatte und/oder ist zumindest abschnittsweise unmittelbar zwischen dem Temperatursensor und der Speicherzelle angeordnet. Dadurch, dass die Ausnehmung sich durch die gesamte Materialstärke der Leiterplatte erstreckt, ist die Ausnehmung ein Durchgangsloch innerhalb der Leiterplatte. Die Ausnehmung kann beispielsweise durch Fräsen und/oder Bohren in die Leiterplatte eingebracht sein.

Ferner ist ein erfindungsgemäßes Speichermodul vorteilhaft, bei welchem die Ausnehmung an einer oder mehreren Seiten über den Temperatursensor hinausragt. Vorzugsweise ist Wärmeleitmaterial in zumindest einem seitlich über den Temperatursensor hinausragenden Abschnitt der Ausnehmung angeordnet. Der seitlich herausragende Abschnitt der Ausnehmung kann zur Applikation des Wärmeleitmaterials während des Herstellungsprozesses des Speichermoduls verwendet werden. Dadurch, dass die Ausnehmung zumindest an einer Seite über den Temperatursensor hinausragt, kann das Wärmeleitmaterial in die Ausnehmung eingebracht, insbesondere eingespritzt, werden, nachdem die Leiterplatte samt dem Temperatursensor mit der einen oder den mehreren Speicherzellen verbunden wurde.

Ferner erlaubt die seitlich über den Temperatursensor hinausragende Ausnehmung das optische Prüfen des Vorhandenseins von Wärmeleitmaterial zwischen der Speicherzelle und dem Temperatursensor. Die seitlichen Abschnitte der Ausnehmung, welche über den Temperatursensor hinausragen, dienen in diesem Fall als Prüffenster, welche im Rahmen der Qualitätssicherung auf das Vorhandensein von Wärmeleitmaterial untersucht werden können. Dies erlaubt auch das Anwenden von automatisierten optischen Prüfverfahren (AOI - Automated-Optical-Inspection), sodass die Herstellungskosten des Speichermoduls weiter verringert werden. Insbesondere weist die Ausnehmung innerhalb der Leiterplatte mehrere Funktionsabschnitte auf, wobei ein Wärmeleitabschnitt zum Leiten der Wärme zwischen der Speicherzelle und dem Temperatursensor dient. Ein Applikationsabschnitt der Ausnehmung kann zum Applizieren des Wärmeleitmaterials Verwendung finden. Ein Prüfabschnitt der Ausnehmung erlaubt das optische Prüfen der thermischen Verbindung zwischen dem Temperatursensor und der Speicherzelle im Rahmen der Qualitätssicherung. Insbesondere ist die Ausnehmung in der Leiterplatte länglich ausgebildet, sie kann aber alternativ auch rund ausgebildet sein.

Ferner ist ein erfindungsgemäßes Speichermodul bevorzugt, bei welchem der Temperatursensor auf einer der einen oder den mehreren Speicherzellen abgewandten Seite der Leiterplatte angeordnet ist. Damit ist der Temperatursensor auch nach Zusammenführe der Leiterplatte mit der einen oder den mehreren Speicherzellen außen sichtbar, sodass eine optische Kontrolle des Sensors sowie seiner mechanischen und thermischen Anbindung erfolgen kann. Die eine oder die mehreren Speicherzellen sind vorzugsweise auf einer Zellseite der Leiterplatte angeordnet, wobei der Temperatursensor auf einer der Zellseite gegenüberliegenden Außenseite der Leiterplatte angeordnet ist.

In einer anderen Ausführungsform des erfindungsgemäßen Speichermoduls ist der Temperatursensor in zwei voneinander beabstandeten Befestigungsbereichen an der Leiterplatte befestigt, wobei die Ausnehmung in der Leiterplatte zumindest abschnittsweise zwischen den Befestigungsbereichen angeordnet ist. Vorzugsweise erstreckt sich der Temperatursensor brückenartig über die Ausnehmung.

In einer weiteren bevorzugten Ausführungsform des erfindungsgemäßen Speichermoduls weist die Leiterplatte Fixierausnehmungen auf, welche vorzugsweise als Fixierschlitze ausgebildet sind. In den Fixierausnehmungen der Leiterplatte sind Kontaktierelemente zur Kontaktierung und/oder Fixierung der einen oder der mehreren Speicherzellen angeordnet. Die Kontaktierelemente können Verbinder-Bleche sein, welche in Kontakt mit den Kontaktpolen der einen oder mehreren Speicherzellen stehen. Über die Kontaktierelemente erfolgt sowohl eine mechanische Befestigung des einen oder der mehreren Speicherzellen an die Leiterplatte als auch eine elektrische Kontaktierung der einen oder der mehreren Speicherzellen mit dem Batterie-Management-System.

Die der Erfindung zugrundeliegende Aufgabe wird ferner durch ein Haushaltsgerät nach Anspruch 7 gelöst, wobei das Speichermodul des erfindungsgemäßen Haushaltsgeräts nach einer der vorstehend beschriebenen Ausführungsformen ausgebildet ist. Hinsichtlich der Vorteile und Modifikationen des erfindungsgemäßen Haushaltsgeräts wird zunächst auf die Vorteile und Modifikationen des erfindungsgemäßen Speichermoduls verwiesen.

Das erfindungsgemäße Haushaltsgerät ist vorzugsweise ein mobiles bzw. portables Haushaltsgerät. Das erfindungsgemäße Haushaltsgerät kann beispielsweise als Akku-Sauger ausgebildet sein. Der Akku-Sauger kann ein Akku-Handsauger oder ein Akku-Bodensauger sein. Das Haushaltsgerät kann ferner auch ein anderer Haushaltsgerätetyp sein, bei welchem ein entsprechendes Speichermodul eingesetzt wird.

Die der Erfindung zugrundeliegende Aufgabe wird ferner durch ein Verfahren nach Anspruch 8 gelöst, wobei das Herstellen der wärmeleitenden Verbindung zwischen dem Temperatursensor und der Speicherzelle im Rahmen des erfindungsgemäßen Verfahrens das Erzeugen einer Ausnehmung in dem Sensorbereich der Leiterplatte und das zumindest teilweise Auffüllen der Ausnehmung mit dem Wärmeleitmaterial umfasst. Mittels des erfindungsgemäßen Verfahrens wird vorzugsweise ein Speichermodul nach einer der vorstehend beschriebenen Ausführungsformen hergestellt.

Das Erzeugen der Ausnehmung in dem Sensorbereich der Leiterplatte kann das Fräsen und/oder das Bohren der Ausnehmung umfassen.

In einer bevorzugten Ausführungsform des erfindungsgemäßen Verfahrens wird das Wärmeleitmaterial vor dem Anordnen der einen oder der mehreren Speicherzellen an der Leiterplatte auf eine oder mehrere Speicherzellen aufgetragen, wobei das zumindest teilweise Auffüllen der Ausnehmung mit dem Wärmeleitmaterial durch das Anordnen der einen oder der mehreren Speicherzellen an der Leiterplatte erfolgt. Die eine oder die mehreren Speicherzellen werden dabei derart an der Leiterplatte angeordnet, dass das auf der einen Speicherzelle befindliche Wärmeleitmaterial im Bereich der Ausnehmung der Leiterplatte und somit im Bereich des einen oder der mehreren Temperatursensoren positioniert wird. Im Rahmen der automatisierten Fertigung des Speichermoduls kann die Ausnehmung, beispielsweise durch optische Verfahren, automatisch erfasst werden, sodass das Positionieren bzw. Zusammenführen der Leiterplatte und des einen oder der mehreren Speicherzellen mit den einen oder der mehreren Temperatursensoren automatisiert erfolgen kann.

Darüber hinaus ist ein erfindungsgemäßes Verfahren vorteilhaft, bei welchem das zumindest teilweise Auffüllen der Ausnehmung mit dem Wärmeleitmaterial nach dem Anordnen der einen oder der mehreren Speicherzellen an der Leiterplatte erfolgt. Vorzugsweise umfasst das zumindest teilweise Auffüllen der Ausnehmung mit dem Wärmeleitmaterial das Einspritzen des Wärmeleitmaterials in die Ausnehmung. Das Einspritzen des Wärmeleitmaterials in die Ausnehmung erfolgt vorzugsweise über einen Abschnitt der Ausnehmung, welcher seitlich über einen oder mehrere Temperatursensoren hinausragt.

Das Verfahren kann ferner das optische Prüfen des Vorhandenseins von Wärmeleitmaterial zwischen dem Temperatursensor und der Speicherzelle umfassen. Das optische Prüfen des Vorhandenseins des Wärmeleitmaterials kann das optische Untersuchen der Ausnehmung, insbesondere der seitlich über einen oder mehrere Temperatursensoren hinausragenden Abschnitte der Ausnehmung, umfassen.

Ausführungsbeispiele der Erfindung sind in den Zeichnungen rein schematisch dargestellt und werden nachfolgend näher beschrieben. Es zeigen
- Fig. 1: ein Ausführungsbeispiel des erfindungsgemäßen Speichermoduls in einer perspektivischen Darstellung, wobei der Temperatursensor auf der zellenabgewandten Seite positioniert ist;
- Fig. 2: die Leiterplatte eines erfindungsgemäßen Speichermoduls samt Temperatursensor in einer Draufsicht;
- Fig. 3: einen Abschnitt einer Leiterplatte eines erfindungsgemäßen Speichermoduls samt Temperatursensor in einer zellenabgewandten oder zellenzugewandten Draufsicht;
- Fig. 4: einen Abschnitt einer Leiterplatte eines weiteren erfindungsgemäßen Speichermoduls samt Temperatursensor in einer zellenabgewandten oder zellenzugewandten Draufsicht; und
- Fig. 5: einen Abschnitt einer Leiterplatte eines weiteren erfindungsgemäßen Speichermoduls samt Temperatursensor in einer zellenabgewandten oder zellenzugewandten Draufsicht.

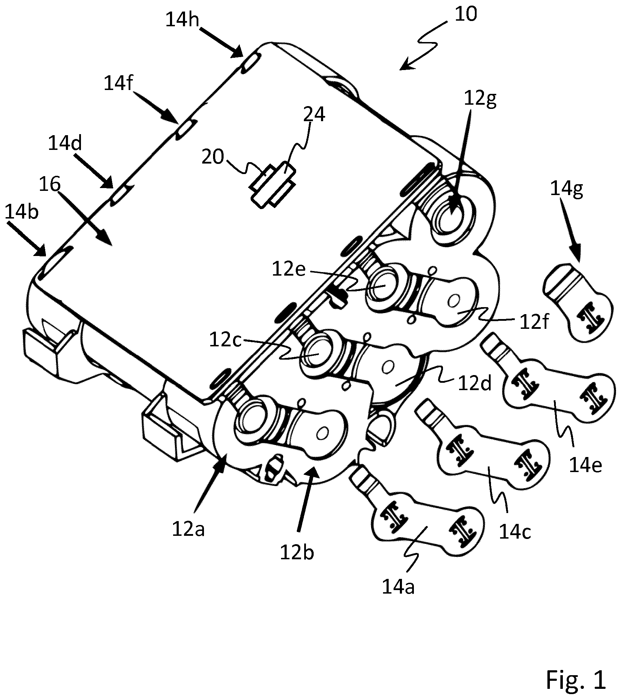

Die Fig. 1 zeigt ein Speichermodul 10 für ein portables Haushaltsgerät zum Speichern von elektrischer Energie.

Das Speichermodul 10 kann in einem Haushaltsgerät eingesetzt werden, welches einen oder mehrere Verbraucher von elektrischer Energie umfasst, wobei das Speichermodul 10 dazu dient, dem einen oder den mehreren Verbrauchern elektrische Energie bereitzustellen. Beispielsweise kann das Speichermodul in einem Akku-Sauger eingesetzt werden, sodass dem Gebläse und anderen elektrischen Einrichtungen des Akku-Saugers von dem Speichermodul 10 elektrische Energie bereitgestellt werden kann.

Das Speichermodul 10 umfasst mehrere als Lithium-Ionen-Zellen ausgebildete Speicherzellen 12a-12g zum Speichern von elektrischer Energie, welche über Kontaktierelemente 14a-14h (die Kontaktierelemente 14a, c, e, g sind hier noch nicht angebracht gezeigt) mit einer elektronischen Schaltung auf der Leiterplatte 16 elektrisch leitfähig verbunden sind. Auf der Leiterplatte 16 sind weitere elektronische Komponenten eines Batterie-Management-Systems des Speichermoduls 10 befestigt. Die Kontaktierelemente 14a-14h sind als Verbinder-Bleche ausgebildet und stehen (in montiertem Zustand) in Kontakt mit den Kontaktierpolen der Speicherzellen 12a-12g. Ferner sind die Kontaktierelemente 14a-14h innerhalb von länglichen Fixierausnehmungen 18a-18h, welche als Fixierschlitze ausgebildet sind, an der Leiterplatte 16 fixiert (in montiertem Zustand).

Ferner umfasst das Speichermodul 10 einen Temperatursensor 20, welcher an der Leiterplatte 16 befestigt und dazu eingerichtet ist, die Temperatur der Speicherzelle 12e zu erfassen. Das Batterie-Management-System umfasst eine Steuerungseinrichtung mit einer Temperaturüberwachung, welche die Verbindung zu den elektrischen Verbrauchern trennt, sobald die Speicherzellen einen vorgegebenen Temperaturbetriebsbereich verlassen.

Der Temperatursensor 20 ist auf der Leiterplatte 16 oberflächenmontiert und über eine teilweise mit Wärmeleitmaterial 26 ausgefüllte Ausnehmung 24 in der Leiterplatte 16 wärmeübertragend mit der Speicherzelle 12e verbunden. Der Temperatursensor 20 ist auf der den Speicherzellen 12a-12g abgewandten Seite der Leiterplatte 16 angeordnet. Die Speicherzellen 12a-12g sind auf einer Zellseite der Leiterplatte 16 angeordnet, wobei der Temperatursensor 20 auf einer der Zellseite gegenüberliegenden Außenseite der Leiterplatte 16 angeordnet ist. Somit ist der Temperatursensor 20 von außen sichtbar und wird nicht durch die Speicherzellen 12a-12g verdeckt. Die Ausnehmung 24 ist abschnittsweise unmittelbar zwischen dem Temperatursensor 20 und der Speicherzelle 12e angeordnet.

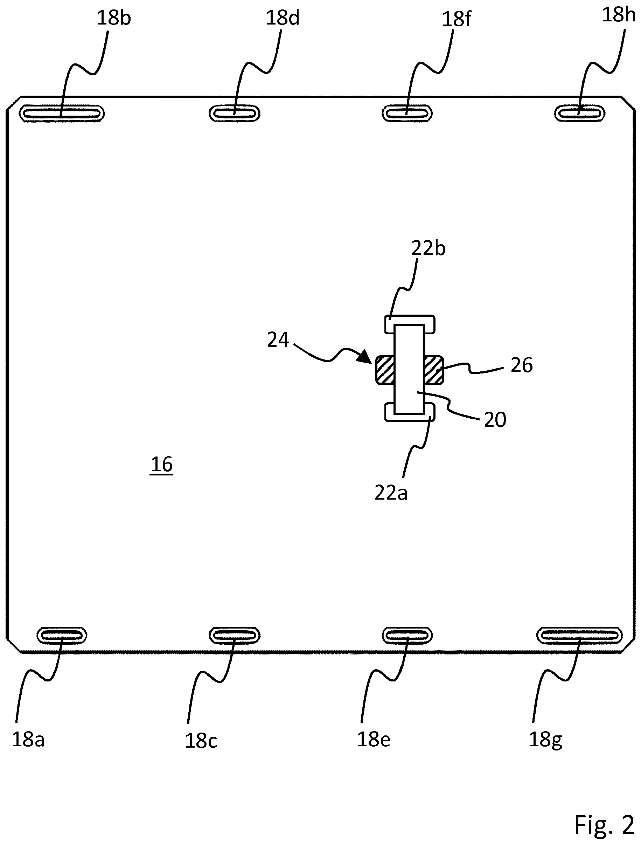

Die Fig. 2 zeigt beispielhaft die Anordnung von Fixierausnehmungen 18a-18h einer Leiterplatte 16 sowie die Anordnung eines oberflächenmontierten Temperatursensors 20. Der Temperatursensor 20 ist in zwei voneinander beabstandeten Befestigungsbereichen 22a, 22b mittels SMD-Pads an der Leiterplatte 16 befestigt. Die Ausnehmung 24 in der Leiterplatte 16 ist länglich ausgebildet und abschnittsweise zwischen den Befestigungsbereichen 22a, 22b angeordnet. Ferner ist die Ausnehmung 24 als Durchgangsloch ausgebildet und erstreckt sich somit durch die gesamte Materialstärke der Leiterplatte 16.

Die Ausnehmung 24 ragt auf gegenüberliegenden Seiten über den Temperatursensor 20 hinaus, wobei in den seitlich über den Temperatursensor 20 hinausragenden Abschnitten der Ausnehmung 24 ebenfalls Wärmeleitmaterial 26 angeordnet ist.

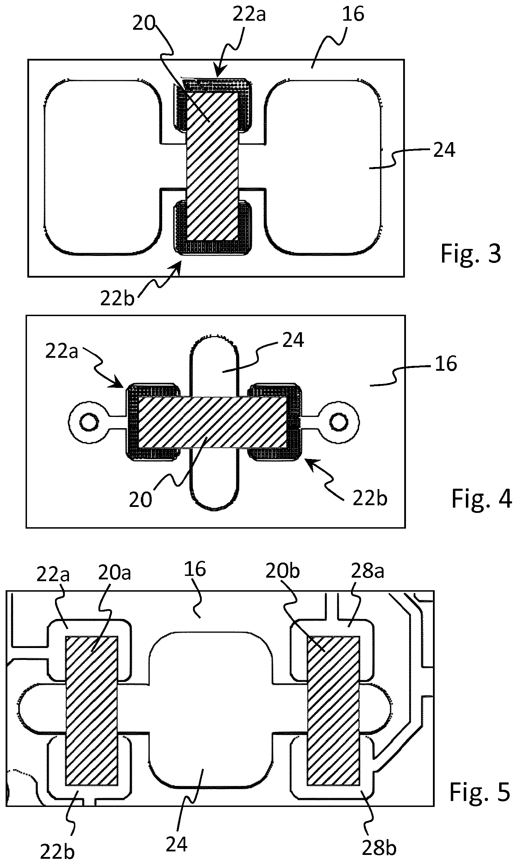

Die Fig. 3 zeigt einen Temperatursensor 20 eines Speichermoduls 10 für elektrische Energie, welcher auf einer Leiterplatte 16 befestigt ist. Der Temperatursensor 20 dient zum Erfassen der Temperatur einer Speicherzelle des Speichermoduls 10.

Der Temperatursensor 20 ist auf der Leiterplatte 16 oberhalb einer Ausnehmung 24 oberflächenmontiert. Die Ausnehmung 24 ist mit Wärmeleitmaterial 26 ausfüllbar, um den Temperatursensor 20 wärmeübertragend mit einer unterhalb der Leiterplatte 16 angeordneten Speicherzelle zu verbinden. Der Temperatursensor 20 ist in zwei voneinander beabstandeten Befestigungsbereichen 22a, 22b über SMD-Pads an der Leiterplatte 16 befestigt. Die Ausnehmung 24 in der Leiterplatte 16 ist abschnittsweise zwischen den Befestigungsbereichen 22a, 22b angeordnet. Die Ausnehmung 24 weist zwei Bereiche auf, welche seitlich von dem Temperatursensor 20 angeordnet sind. Die seitlichen Bereiche der Ausnehmung 24 können zur Applikation von Wärmeleitmaterial 26 genutzt werden. Alternativ oder zusätzlich können die seitlichen Bereiche der Ausnehmung 24 zum Prüfen der Applikation des Wärmeleitmaterials 26 zwischen der Speicherzelle und dem Temperatursensor 20 zum Zwecke der Qualitätssicherung genutzt werden.

Beim Herstellen eines entsprechenden Speichermoduls 10 wird eine wärmeleitende Verbindung zwischen dem Temperatursensor 20 und einer Speicherzelle mittels eines fließfähigen Wärmeleitmaterials 26 hergestellt. Das Herstellen der wärmeleitenden Verbindung zwischen dem Temperatursensor 20 und der Speicherzelle umfasst dabei das Erzeugen der Ausnehmung 24 in der Leiterplatte 16 und das Auffüllen der Ausnehmung 24 mit dem Wärmeleitmaterial 26. Aufgrund der Größe und der Form der Ausnehmung 24 kann das Auffüllen der Ausnehmung 24 mit dem Wärmeleitmaterial 26 bei dieser Ausführungsform nach dem Anordnen der Speicherzellen an der Leiterplatte 16 erfolgen und wir durch ein direktes Einspritzen des Wärmeleitmaterials 26 in die Ausnehmung 24 umgesetzt.

Die Fig. 4 zeigt ebenfalls einen Temperatursensor 20 eines Speichermoduls 10 für elektrische Energie, welcher auf einer Leiterplatte 16 befestigt ist. Die Ausnehmung 24 weist in dieser Ausführungsform lediglich einen geringfügigen seitlichen Überstand über den Temperatursensor 20 auf. Da ein direktes Einspritzen des Wärmeleitmaterials 26 in die Ausnehmung 24 nach dem Zusammenführen der Speicherzellen und der Leiterplatte 16 nicht ohne weiteres möglich ist, wird das Wärmeleitmaterial 26 in diesem Fall vor dem Anordnen der Speicherzellen an der Leiterplatte 16 auf eine Speicherzelle aufgetragen, wobei das Auffüllen der Ausnehmung 24 mit dem Wärmeleitmaterial 26 durch das Anordnen der Speicherzellen an der Leiterplatte 16 erfolgt.

Die Fig. 5 zeigt zwei Temperatursensoren 20a, 20b eines Speichermoduls 10 für elektrische Energie, welcher auf einer Leiterplatte 16 befestigt sind. Der Temperatursensoren 20a, 20b können zum Erfassen der Temperatur der gleichen Speicherzelle des Speichermoduls 10 oder zum Erfassen der Temperatur unterschiedlicher Speicherzellen des Speichermoduls 10 eingesetzt werden.

Die Temperatursensoren 20a, 20b sind jeweils in zwei voneinander beabstandeten Befestigungsbereichen 22a, 22b, 28a, 28b über SMD-Pads an der Leiterplatte 16 befestigt. Die Temperatursensoren 20a, 20b sind auf der Leiterplatte 16 oberhalb derselben Ausnehmung 24 oberflächenmontiert, wobei die Ausnehmung 24 zwei schmale Bereiche, welche unterhalb der Temperatursensoren 20a, 20b positioniert sind, und einen breiten Bereich, welcher die beiden schmalen Bereiche der Ausnehmung 24 miteinander verbindet, aufweist.

### Bezugszeichen

- 10: Speichermodul
- 12a-12g: Speicherzellen
- 14a-14h: Kontaktierelemente
- 16: Leiterplatte
- 18a-18h: Fixierausnehmungen
- 20, 20a, 20b: Temperatursensoren
- 22a, 22b: Befestigungsbereiche
- 24: Ausnehmung
- 26: Wärmeleitmaterial
- 28a, 28b: Befestigungsbereiche

## Patentansprüche

1. Speichermodul (10) für elektrische Energie für ein Haushaltsgerät, mit
- einer oder mehreren Speicherzellen (12a-12g) zum Speichern von elektrischer Energie;
- einer Leiterplatte (16); und
- zumindest einem Temperatursensor (20, 20a, 20b), welcher an der Leiterplatte (16) befestigt und dazu eingerichtet ist, die Temperatur einer oder mehrerer Speicherzellen (12e) zu erfassen;
**dadurch gekennzeichnet, dass** der Temperatursensor (20, 20a, 20b) auf der Leiterplatte (16) oberflächenmontiert ist und über eine zumindest teilweise mit Wärmeleitmaterial (26) ausgefüllte Ausnehmung (24) in der Leiterplatte (16) wärmeübertragend mit der Speicherzelle (12e) verbunden ist.

2. Speichermodul (10) nach Anspruch 1,
**dadurch gekennzeichnet, dass** die Ausnehmung (24) sich durch die gesamte Materialstärke der Leiterplatte (16) erstreckt und/oder zumindest abschnittsweise unmittelbar zwischen dem Temperatursensor (20, 20a, 20b) und der Speicherzelle (12e) angeordnet ist.

3. Speichermodul (10) nach Anspruch 1 oder 2,
**dadurch gekennzeichnet, dass** die Ausnehmung (24) an einer oder mehreren Seiten über den Temperatursensor (20, 20a, 20b) hinausragt und vorzugsweise Wärmeleitmaterial (26) in zumindest einem seitlich über den Temperatursensor (20, 20a, 20b) hinausragenden Abschnitt der Ausnehmung (24) angeordnet ist.

4. Speichermodul (10) nach einem der vorstehenden Ansprüche,
**dadurch gekennzeichnet, dass** der Temperatursensor (20, 20a, 20b) auf einer der einen oder den mehreren Speicherzellen (12a-12g) abgewandten Seite der Leiterplatte (16) angeordnet ist.

5. Speichermodul (10) nach einem der Ansprüche 1 bis 3,
**dadurch gekennzeichnet, dass** der Temperatursensor (20, 20a, 20b) auf einer der einen oder den mehreren Speicherzellen (12a-12g) zugewandten Seite der Leiterplatte (16) angeordnet ist.

6. Speichermodul (10) nach einem der vorstehenden Ansprüche,
**dadurch gekennzeichnet, dass** der Temperatursensor (20, 20a, 20b) in zwei voneinander beabstandeten Befestigungsbereichen (22a, 22b, 28a, 28b) an der Leiterplatte (16) befestigt ist, wobei die Ausnehmung (24) in der Leiterplatte (16) zumindest abschnittsweise zwischen den Befestigungsbereichen (22a, 22b, 28a, 28b) angeordnet ist.

7. Haushaltsgerät, mit
- einem oder mehreren Verbrauchern von elektrischer Energie; und
- einem Speichermodul (10) für elektrische Energie, welches dazu eingerichtet ist, dem einen oder den mehreren Verbrauchern elektrische Energie bereitzustellen;
**dadurch gekennzeichnet, dass** das Speichermodul (10) nach einem der vorstehenden Ansprüche ausgebildet ist.

8. Verfahren zum Herstellen eines Speichermoduls (10) für elektrische Energie für ein Haushaltsgerät, insbesondere eines Speichermoduls (10) nach einem der Ansprüche 1 bis 6, mit den Schritten:
- Bereitstellen einer Leiterplatte (16);
- Befestigen eines Temperatursensors (20, 20a, 20b) in einem Sensorbereich der Leiterplatte (16);
- Anordnen einer oder mehrerer Speicherzellen (12a-12g) zum Speichern von elektrischer Energie an der Leiterplatte (16); und
- Herstellen einer wärmeleitenden Verbindung zwischen dem Temperatursensor (20, 20a, 20b) und einer Speicherzelle (12e) mittels eines Wärmeleitmaterials (26);
**dadurch gekennzeichnet, dass** das Herstellen der wärmeleitenden Verbindung zwischen dem Temperatursensor (20, 20a, 20b) und der Speicherzelle (12e) das Erzeugen einer Ausnehmung (24) in dem Sensorbereich der Leiterplatte (16) und das zumindest teilweise Auffüllen der Ausnehmung (24) mit dem Wärmeleitmaterial (26) umfasst.

9. Verfahren nach Anspruch 8,
**dadurch gekennzeichnet, dass** das Wärmeleitmaterial (26) vor dem Anordnen der einen oder der mehreren Speicherzellen (12a-12g) an der Leiterplatte (16) auf eine Speicherzelle (12e) aufgetragen wird, wobei das zumindest teilweise Auffüllen der Ausnehmung (24) mit dem Wärmeleitmaterial (26) durch das Anordnen der einen oder der mehreren Speicherzellen (12a-12g) an der Leiterplatte (16) erfolgt.

10. Verfahren nach Anspruch 8, **dadurch gekennzeichnet, dass** das zumindest teilweise Auffüllen der Ausnehmung (24) mit dem Wärmeleitmaterial (26) nach dem Anordnen der einen oder der mehreren Speicherzellen (12a-12g) an der Leiterplatte (16) erfolgt und vorzugsweise das Einspritzen des Wärmeleitmaterials (26) in die Ausnehmung (24) umfasst.

## Claims

1. Storage module (10) for electrical energy for a domestic appliance, comprising
- one or more storage cells (12a-12g) for storing electrical energy;
- a printed circuit board (16); and
- at least one temperature sensor (20, 20a, 20b), which is attached to the printed circuit board (16) and is designed to detect the temperature of one or more storage cells (12e);
**characterised in that** the temperature sensor (20, 20a, 20b) is surface-mounted on the printed circuit board (16) and is connected to the storage cell (12e) in a heat-transmitting manner via a recess (24) in the printed circuit board (16), which recess is at least partially filled with thermally conductive material (26).

2. Storage module (10) according to claim 1, **characterised in that** the recess (24) extends through the entire material thickness of the printed circuit board (16) and/or is arranged at least in portions directly between the temperature sensor (20, 20a, 20b) and the storage cell (12e).

3. Storage module (10) according to either claim 1 or claim 2, **characterised in that** the recess (24) projects beyond the temperature sensor (20, 20a, 20b) on one or more sides and thermally conductive material (26) is preferably arranged in at least one portion of the recess (24) that projects laterally beyond the temperature sensor (20, 20a, 20b).

4. Storage module (10) according to any of the preceding claims, **characterised in that** the temperature sensor (20, 20a, 20b) is arranged on a face of the printed circuit board (16) that faces away from the one or more storage cells (12a-12g).

5. Storage module (10) according to any of claims 1 to 3, **characterised in that** the temperature sensor (20, 20a, 20b) is arranged on a face of the printed circuit board (16) that faces the one or more storage cells (12a-12g).

6. Storage module (10) according to any of the preceding claims, **characterised in that** the temperature sensor (20, 20a, 20b) is attached to the printed circuit board (16) in two attachment regions (22a, 22b, 28a, 28b) which are spaced apart from one another, the recess (24) in the printed circuit board (16) being arranged at least in portions between the attachment regions (22a, 22b, 28a, 28b).

7. Domestic appliance comprising
- one or more consumers of electrical energy; and
- a storage module (10) for electrical energy, which is designed to provide electrical energy to the one or more consumers;
**characterised in that** the storage module (10) is designed according to any of the preceding claims.

8. Method for producing a storage module (10) for electrical energy for a domestic appliance, in particular a storage module (10) according to any of claims 1 to 6, comprising the steps of:
- providing a printed circuit board (16);
- attaching a temperature sensor (20, 20a, 20b) in a sensor region of the printed circuit board (16);
- arranging one or more storage cells (12a-12g) for storing electrical energy on the printed circuit board (16); and
- producing a thermally conductive connection between the temperature sensor (20, 20a, 20b) and a storage cell (12e) by means of a thermally conductive material (26);
**characterised in that** producing the thermally conductive connection between the temperature sensor (20, 20a, 20b) and the storage cell (12e) comprises producing a recess (24) in the sensor region of the printed circuit board (16) and at least partially filling the recess (24) with the thermally conductive material (26).

9. Method according to claim 8, **characterised in that** the thermally conductive material (26) is applied to a storage cell (12e) before the one or more storage cells (12a-12g) are arranged on the printed circuit board (16), the recess being at least partially filled (24) with the thermally conductive material (26) by the arrangement of the one or more storage cells (12a-12g) on the printed circuit board (16).

10. Method according to claim 8, **characterised in that** the recess (24) is at least partially filled with the thermally conductive material (26) after the one or more storage cells (12a-12g) have been arranged on the printed circuit board (16), and the filling preferably comprises injecting thermally conductive material (26) into the recess (24).

## Revendications

1. Module de stockage (10) d'énergie électrique pour un appareil électroménager, comportant
- une ou plusieurs cellules de stockage (12a-12g) pour stocker de l'énergie électrique ;
- une carte de circuit imprimé (16) ; et
- au moins un capteur de température (20, 20a, 20b) qui est fixé à la carte de circuit imprimé (16) et est configuré pour détecter la température d'une ou plusieurs cellules de stockage (12e) ;
**caractérisé en ce que** le capteur de température (20, 20a, 20b) est monté en surface sur la carte de circuit imprimé (16) et est relié à la cellule de stockage (12e) par transfert thermique par l'intermédiaire d'un évidement (24), lequel est au moins partiellement rempli d'un matériau thermiquement conducteur (26), dans la carte de circuit imprimé (16).

2. Module de stockage (10) selon la revendication 1,
**caractérisé en ce que** l'évidement (24) s'étend sur toute l'épaisseur du matériau de la carte de circuit imprimé (16) et/ou est disposé sur au moins certaines parties directement entre le capteur de température (20, 20a, 20b) et la cellule de stockage (12e).

3. Module de stockage (10) selon la revendication 1 ou 2,
**caractérisé en ce que** l'évidement (24) fait saillie sur un ou plusieurs côtés sur le capteur de température (20, 20a, 20b) et qu'un matériau thermiquement conducteur (26) est de préférence disposé dans au moins une partie de l'évidement (24), laquelle fait saillie latéralement sur le capteur de température (20, 20a, 20b).

4. Module de stockage (10) selon l'une des revendications précédentes,
**caractérisé en ce que** le capteur de température (20, 20a, 20b) est disposé sur un côté opposé aux une ou plusieurs cellules de stockage (12a-12g) de la carte de circuit imprimé (16).

5. Module de stockage (10) selon l'une des revendications 1 à 3,
**caractérisé en ce que** le capteur de température (20, 20a, 20b) est disposé sur un côté faisant face aux une ou plusieurs cellules de stockage (12a-12g) de la carte de circuit imprimé (16).

6. Module de stockage (10) selon l'une des revendications précédentes,
**caractérisé en ce que** le capteur de température (20, 20a, 20b) est fixé à la carte de circuit imprimé (16) dans deux zones de fixation (22a, 22b, 28a, 28b) espacées l'une de l'autre, l'évidement (24) étant disposé dans la carte de circuit imprimé (16) sur au moins certaines parties entre les zones de fixation (22a, 22b, 28a, 28b).

7. Appareil électroménager, comportant
- un ou plusieurs consommateurs d'énergie électrique ; et
- un module de stockage (10) d'énergie électrique, qui est conçu pour fournir de l'énergie électrique à un ou plusieurs consommateurs ;
**caractérisé en ce que** le module de stockage (10) est conçu selon l'une des revendications précédentes.

8. Procédé de réalisation d'un module de stockage (10) d'énergie électrique pour un appareil électroménager, en particulier un module de stockage (10) selon l'une des revendications 1 à 6, comportant les étapes :
- de fourniture d'une carte de circuit imprimé (16) ;
- de fixation d'un capteur de température (20, 20a, 20b) dans une zone de capteur de la carte de circuit imprimé (16) ;
- de disposition d'une ou plusieurs cellules de stockage (12a-12g) pour stocker de l'énergie électrique sur la carte de circuit imprimé (16) ; et
- de réalisation d'une liaison thermiquement conductrice entre le capteur de température (20, 20a, 20b) et une cellule de stockage (12e) au moyen d'un matériau thermiquement conducteur (26) ;
**caractérisé en ce que** la réalisation de la liaison thermiquement conductrice entre le capteur de température (20, 20a, 20b) et la cellule de stockage (12e) comprend la production d'un évidement (24) dans la zone de capteur de la carte de circuit imprimé (16) et le remplissage au moins partiel de l'évidement (24) avec le matériau thermiquement conducteur (26).

9. Procédé selon la revendication 8,
**caractérisé en ce que** le matériau thermiquement conducteur (26) est appliqué sur une cellule de stockage (12e) avant que l'une ou les cellules de stockage (12a-12g) sont disposées sur la carte de circuit imprimé (16), l'évidement étant au moins partiellement rempli (24) avec le matériau thermiquement conducteur (26) en disposant l'une ou les cellules de stockage (12a-12g) sur la carte de circuit imprimé (16).

10. Procédé selon la revendication 8,
**caractérisé en ce que** l'évidement (24) est au moins partiellement rempli avec le matériau thermiquement conducteur (26) après que l'une ou les cellules de stockage (12a-12g) ont été disposées sur la carte de circuit imprimé (16), et comprend de préférence l'injection du matériau thermiquement conducteur (26) dans l'évidement (24).
